# EUROPEAN PATENT APPLICATION

(11) **EP 2 452 816 A1**
(43) Date of publication of application: **16.05.2012**
(21) Application number: 11189320.2
(22) Date of filing: 16.11.2011
(51) Int. Cl.: B32B 27/10, B65D 65/18, B65D 65/40, B32B 3/10

(54) **Reinforced composite web**

(30) Priority: 16.11.2010 IT RM20100190 U
(71) Applicant: Gimsa S.r.l., 01100 Viterbo (VT) (IT)
(72) Inventor: Giusti, Arturo, 01020 Bomarzo VT (IT)
(74) Representative: Papa, Elisabetta

(57) **Abstract**

A composite web (110) for the packaging of pasta or bread, comprising:
- a first sheet (101) of paper material;
- a second sheet (102) of a transparent material forming, jointly to the first sheet, an external surface of a wrapping being formed, having a transparent portion (200) defined by the second sheet; and
- a third sheet (3) of a transparent material, laid on the first and second sheet so as to substantially integrally cover a respective face thereof, so as to define an internal surface of the wrapping being formed suitable to contact the packaged product,

wherein the third sheet is joined to the first and second sheet by a glue deposition (50, 51, 52) carried out thereon and that does not involve the transparent portion or a central part of the latter (Figure 1).

## Description

The present invention refers to a reinforced composite web, suitable for the making of wrappings for the packaging of food products, in particular pasta or bread.

There are various known types of wrappings made from a composite web formed, e.g. by strips of paper material alternate with strips of transparent material, or obtained as a single sheet of paper material on which continuous or die-cut windows are present, closed by transparent material. The joining of the sheets of paper material with those of transparent material is carried out by glue depositions on selected zones of the sheets themselves, or with glue spreading applied on the entire surface of the overlapped sheets.

One of the problems of this type of makings is linked to the difference of thickness among different zones of the composite web - particularly when made in alternate strips or with die-cut windows closed with a transparent material - which may create inconveniences at the reeling stage.

A further problem is associated to the possibility of critical stress concentrations in correspondence of interface areas between the two materials, and in particular in the transparent material, typically less resistant.

These drawbacks are partly solved by the composite web structure described in IT 1 359 678.

Object of the present invention is to provide a composite web structure alternative to currently available ones, allowing to obtain a web generally more resistant, particularly in the transparent zones, without burdening the thicknesses.

Such an object is attained by a composite web according to claim 1.

Preferred features of the present invention are present in the dependent claims thereof.

The present invention provides several relevant advantages. The main advantage lies in that the proposed web has a specific reinforcement on its transparent portion, without burdening the overall thicknesses of the web with glue depositions carried out in correspondence of such a portion.

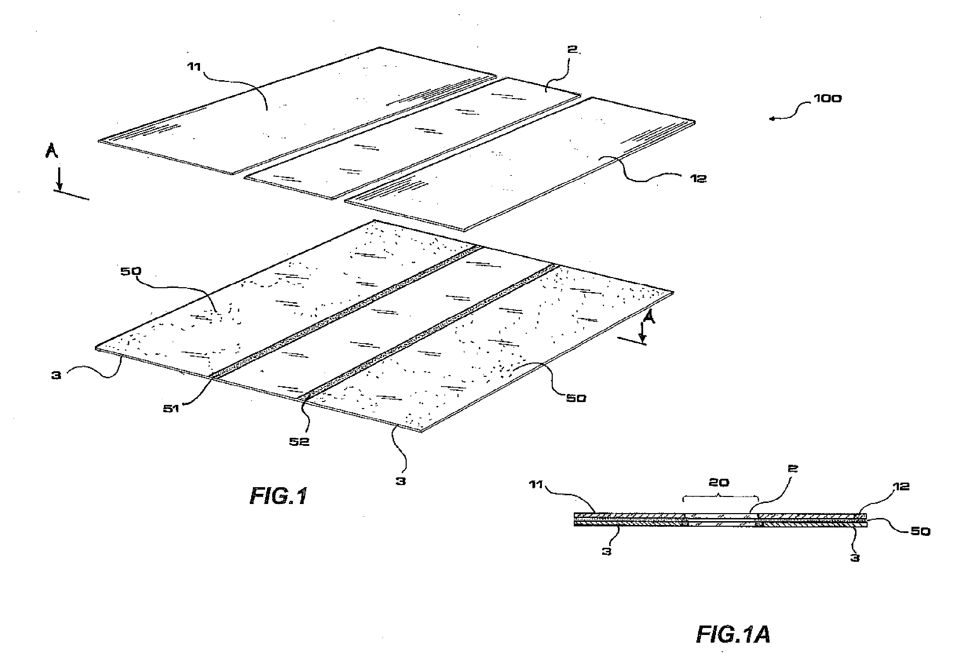

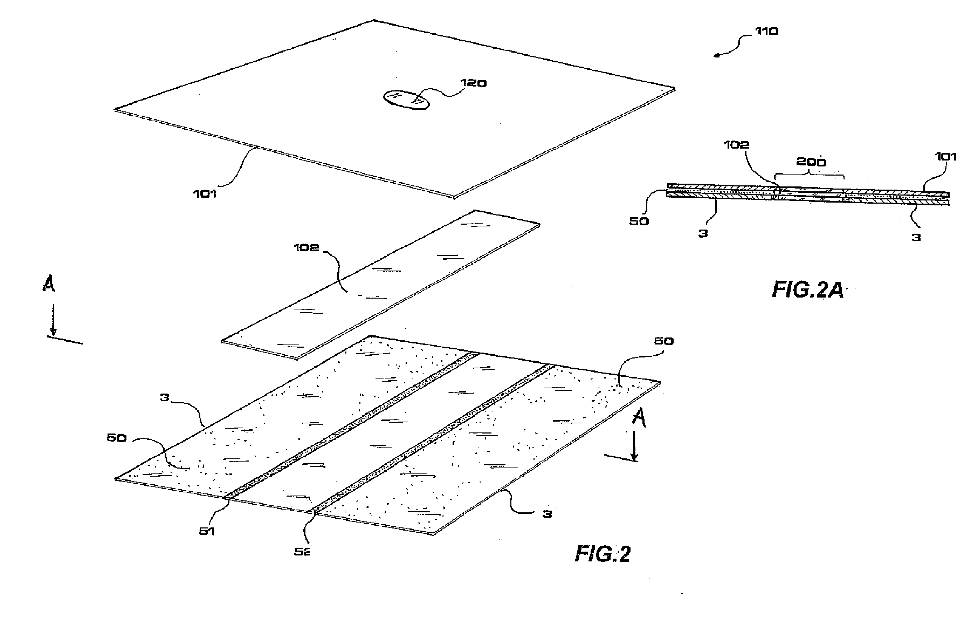

Other advantages, features and the operation modes of the present invention will be made evident in the following detailed description of some embodiments thereof, given by way of example and not for limitative purposes. Reference will be made to the figures of the annexed drawings, wherein:
■ Figure 1 shows a schematic and partially exploded perspective view of a first preferred embodiment of a composite web according to the present invention;
■ Figure 1A shows a cross-sectional view of the composite web of Figure 1, taken along line A-A of the latter Figure, wherein thicknesses have been depicted generally magnified, and not necessarily in scale or in proportion;
■ Figure 2 shows a schematic and partially exploded perspective view of a second preferred embodiment of a composite web according to the present invention; and
■ Figure 2A shows a cross-sectional view of the composite web of Figure 2, taken along line A-A of the latter Figure, wherein thicknesses have been depicted generally magnified, and not necessarily in scale or in proportion.

Referring initially to Figures 1 and 1A, a continuous composite web for the making of wrappings for the packaging of food products according to a preferred embodiment of the invention is generally denoted by 100. In the present example the web 100 is specifically intended for the packaging of pasta or bakery products.

The web 100 comprises a pair of first sheets of paper material, respectively denoted by 11 and 12, between which it is interposed a second sheet 2 of a transparent or substantially transparent material. Such three sheets have each a substantially strip-like shape and are arranged with their own longitudinal side edges arranged side-by-side, so as to make a first layer of the web 100 with a configuration just in alternate strips.

Juxtaposition of such three strips of material defines an external surface of the wrapping being formed, having a transparent portion 20 defined just by the second sheet 2.

The second sheet 2 has a planar extension generally lower than the sum of the planar extensions of the first sheets 11 and 12.

Moreover, preferably the second sheet 2 is in the form of a film, having a thickness lower than that of the first sheets 11 and 12.

Of course, variant embodiments may envisage a number of strips of paper material different from two, in particular one or more than two, and/or a number of strips of transparent material different from one, and/or that the individual strips side-by-side may be partially overlapped.

Moreover, the composite web 100 has a second layer made by means of a third reinforcement sheet 3 of a transparent or substantially transparent material, it also preferably in the form of a film. The latter is joined to the first three sheets 11, 12 and 2 so as to substantially integrally cover a respective face thereof, so as to define an internal surface of the wrapping being formed suitable to contact the packaged product.

The third sheet 3 is joined to the first two sheets 11, 12 of paper material and to the transparent second sheet 2 by glue depositions carried out thereon and that do not involve the transparent portion 20.

In particular, the above-mentioned glue depositions may be of continuous spreading type, lattice type, glue point type, etc.

In the present example, in correspondence of the union of the second sheet 2 to the third sheet 3 a glue deposition is provided, having an arrangement substantially in continuous strips spaced apart transversally so as not to involve said transparent portion 20, which glue strips are respectively denoted by 51 and 52.

Always in the present example, in correspondence of the union of the first sheets 11 and 12 to the third sheet 3 a lattice-type glue deposition is provided, schematically shown in the figures and denoted by 50.

A variant envisages that the glue deposition 50 be of a type obtained by continuous spreading, and not of lattice type.

Another variant embodiment envisages that the glue depositions on the third sheet 3 involve solely the side edges of the transparent portion, but not a central portion thereof. Accordingly, it is also possible that one or more of the glue depositions on the third sheet be carried out with a continuous spreading, or a lattice, and that they be not provided solely in correspondence of the transparent portion or of the central part thereof.

A second embodiment of the web of the invention is shown in Figures 2 and 2A and will be described hereinafter merely in the aspects differentiating it from the first embodiment considered above, using the same reference numbers already used hereto in case of alike elements.

In this case, the continuous composite web, here denoted by 110, comprises a single first sheet 101 of paper material bearing a die-cut window 120 closed by a second sheet 102 of a transparent or substantially transparent material, the latter in the form of a strip and preferably of film type.

In this case as well, it is provided a third reinforcement sheet 3 of a transparent or substantially transparent material, joined to the second sheet 102 by glue depositions 51 and 52 in side-by-side strips and to the first sheet 101 by a glue deposition 50 in a lattice.

In this case as well, the glue depositions 51 and 52 do not involve the transparent portion of the composite web 110, denoted herein by 200 and defined by the transparent material closing the die-cut window 120.

Always as in the first embodiment, a variant may envisage that solely a central part of the transparent portion be not involved by the glue deposition.

Moreover, in this case as well a variant envisages that the deposition for joining to the first sheet 101 be of continuous spreading type and not of lattice type, and that the deposition for joining to the second sheet 102 be "widespread" and not limited to two strips, always not involving the transparent portion or the central portion thereof.

The present invention has hereto been described with reference to preferred embodiments thereof. It is understood that other embodiments might exist, all falling within the concept of the present invention, as defined by the protective scope of the claims hereinafter.

## Claims

1. A composite web (100; 110) suitable for use for the packaging of food products, comprising:
- at least one first sheet (11, 12; 101) of paper material;
- at least one second sheet (2; 102) of a substantially transparent material (2), apt to form, jointly to said first sheet (11, 12; 101) an external surface of a wrapping being formed, having a transparent portion (20; 200) defined by said second sheet (2; 102); and
- a third reinforcement sheet (3) of a substantially transparent material, associated to said at least one first sheet (11, 12; 101) and second sheet (2; 102) so as to make a reinforcement layer in correspondence of said transparent portion (20;200),
wherein said third sheet (3) is joined to said first (11, 12; 101) and second (2; 102) sheet by one or more glue depositions (50, 51, 52) carried out thereon and that do not involve said transparent portion (20; 200) or a central part of the latter.

2. The composite web (100; 110) according to claim 1, wherein said second sheet (2; 102) has a planar extension generally lower than the dimensions of said first sheet or the sum of the planar extensions of said first sheets (11, 12; 101).

3. The composite web (100) according to claim 1 or 2, comprising a pair of first sheets (11, 12) of paper material between which it is interposed said second sheet (2) of a substantially transparent material.

4. The composite web (110) according to claim 1 or 2, comprising a first sheet (101) of paper material bearing a die-cut window (120) closed by said second sheet (102).

5. The composite web (100; 110) according to any one of the preceding claims, comprising, in correspondence of the union of said third sheet (3) to said second sheet (2; 102), a glue deposition (51, 52) with an arrangement substantially in strips transversally spaced apart so as not to involve said transparent portion (20; 200).

6. The composite web (100; 110) according to any one of the preceding claims, wherein said third sheet (3) is laid on said at least one first sheet (11, 12; 101) and second sheet (2; 102) so as to substantially integrally cover a respective face thereof, so as to define an internal surface of the wrapping being formed suitable to contact the packaged product.
